# EUROPÄISCHE PATENTSCHRIFT

(11) **EP 2 957 880 B1**
(45) Veröffentlichungstag und Bekanntmachung des Hinweises auf die Patenterteilung: **11.04.2018**
(21) Anmeldenummer: 15171135.5
(22) Anmeldetag: 09.06.2015
(51) Int. Cl.: G01L 1/04, G01L 1/12, G01L 3/14

(54) **AUSGESTALTUNG VON ELEMENTAREN FEDERKÖRPERN ZU KRAFT- ODER ZU DREHMOMENTSENSOREN**
LAYOUT OF ELEMENTARY SPRING BODIES FOR FORCE OR TORQUE SENSORS
ARRANGEMENT DE CORPS ELASTIQUES ELEMENTAIRES POUR DES CAPTEURS DE COUPLE OU DE FORCE

(30) Priorität: 16.06.2014 AT 4802014
(43) Veröffentlichungstag der Anmeldung: 23.12.2015
(73) Patentinhaber: Braunschmid, Franz, 1100 Wien (AT)
(72) Erfinder: Braunschmid, Tamara Dr., 1100 Wien (AT); Veronika, David, 2452 Mannersdorf (AT)
(74) Vertreter: Patentanwälte Pinter & Weiss OG

(56) Entgegenhaltungen:
- EP-A1- 2 567 837
- CA-A- 1 018 371
- CA-A1- 2 778 297
- DE-A1-102012 110 617
- DE-C1- 4 420 691
- US-A1- 2008 071 487

## Beschreibung

Die Erfindung betrifft einen Kraftsensor gemäß dem Oberbegriff des beigefügten Anspruchs.

Ein elementarer Federkörper im Sinne der Erfindung liegt vor, wenn durch seine Teilung die erfindungsgegenständlich vorausgesetzten mechanischen Eigenschaften verlorengehen, beispielsweise die Biegbarkeit oder Tordierbarkeit einer I-Gestalt, wenn durch Teilung die Länge geringer wird als die Dicke, oder wenn aus einer V-Gestalt mit informationstragendem Öffnungswinkel durch mittige Teilung zwei I-Gestalten entstehen, oder wenn bei einer C-Gestalt durch Teilung der informationsbeaufschlagte Krümmungsradius oder die gegenseitige Zuwendung ihrer Enden verschwindet. Die Bezeichnung "elementar" wurde gewählt, um klarzustellen, dass der erfindungsgemäße Federkörper das letzte Element ist, das nach Teilungen noch die vorausgesetzten mechanischen Eigenschaften besitzt.

Ein Federkörper, der etwa I- oder C- oder U- oder V-förmig gestaltetet und ohne Verlust wesentlicher geometrischer oder mechanischer Eigenschaften keiner Teilung mehr zugänglich ist, ist hier kurz als 'elementarer Federkörper' bezeichnet.

Die Gestalten von im Betrieb auf Biegung oder Zug oder Druck oder Torsion beanspruchten Federn können zu ihrer Analyse abschnittweise als elementare Federkörper aufgefasst werden, welche mit fließenden Materialübergängen zu zusammengesetzten Federkörpern aneinandergereiht oder zusammengefügt sind. Sowohl elementare als auch zusammengesetzte Federkörper können mit messgrößeneinleitenden oder messgrößenausleitenden oder der Befestigung dienenden funktionellen Ausformungen zu einstückigen Gesamtfederkörpern ergänzt sein; solche funktionelle Ausformungen sind beispielsweise die Schenkel einer Schenkelfeder oder die Endhaken einer Zugfeder. Funktionellen Ausformungen können aber auch Arbeitsfunktionen zukommen, beispielsweise Greifen oder Tasten oder Klemmen oder Anzeigen von Positionen oder schützendes Begrenzen einer Federkörperverformung.

Eine Aneinanderreihung elementarer Federkörper in der Ebene kann auf eine Mäanderform oder auf eine Spiralform als zusammengesetzten Federkörper hinauslaufen, eine dreidimensionale Aneinanderreihung auf eine Schraubenfeder oder eine Kegelfeder oder eine beliebige andere Gestalt.

Federkörper können an elastischen Trägerkörpern angebracht oder in elastische Umgebungen eingebettet sein. Nichtmetallische oder nichtferromagnetische Federkörper können mit metallischen oder ferromagnetischen Materialeinschlüssen ausgestattet sein.

EP2567837A1 offenbart einen Sensor mit einem Federkörper, der sich beim Angreifen einer Messgröße (Kraft oder Drehmoment) verformt, wobei in einer Ausführungsform der sich bei der Verformung ändernde Relativabstand zwischen einem magnetfelderzeugenden Messelement und einem magnetfeldmessenden Element erfasst und zur Abstandsmessung ausgewertet wird. Die Magnetfeldmessung kann beispielsweise durch einen Hall-Sensor erfolgen.

DE4420691 offenbart eine Kraftmesszelle mit einem Sensorelement und einer Sensorelement-Spule. Das Sensorelement besteht aus einem nichtmagnetischen Material. Bei einer mechanischen Verformung ändert sich eine effektive Permeabilität des Sensorelements.

US 2008/0071487 A1 offenbart einen Körper aus einem magnetostriktives Material, der als "Sensor" bezeichnet wird, und durch ein aufgebrachtes magnetisches Wechselfeld berührungsfrei in Schwingung versetzt wird. Das Schwingungsverhalten des derart angeregten Körpers wird ausgewertet.

Gemäß DE 10 2006 051 161 A1 ist ein geschlitzter ringförmiger Spulenkern aus magnetisierbarem Material als Federkörper mit mindestens zwei Befestigungspunkten, an denen Druck- oder Zugelemente befestigbar sind, vorgesehen, sowie eine einzelne um den Federkörper herum gewickelte Spule lockerer Montageweise mit einer nicht näher erklärten "Mehrzahl an Wicklungen". Der Spule obliegt kein Einlesen einer Ankerposition, und es ist auch keine Ankerrückwirkung zur Messgrößenerfassung genützt.

DE 198 05 687 A1 offenbart einen Kraftsensor mit ringförmigem Gummiteil als Federkörper. Der von der Spule erzeugte magnetische Fluss, auf den Anspruch 1 bezogen ist, nimmt keinesfalls den in der bezogenen graphischen Darstellung dargelegten Weg, wodurch Offenbarung und Ansprüche ad absurdum geführt sind.

Nach DE 10 2011 085 263 A1 sind eine als Doppelfeder ausgeführte Spule und eine zu ihr etwa koaxiale, galvanisch getrennte, mit einem definierten Wechselstrom versorgte Messspule transformatorisch gekoppelt. Beide Spulen sind im Betrieb von eigenständigen Strömen durchflossen; ihr magnetisches Summenfeld ist zur Messgrößenerfassung herangezogen, nicht jedoch eine Ankerrückwirkung.

Die Patentschrift DD 202 758 betrifft einen Kraftaufnehmer mit einer um einen fixen Abschnitt eines ferromagnetischen Kerns herumgewickelten Spule, sowie mit je einem ferromagnetischen Federkörper an den beiden offenen Enden des Kerns. Im Betrieb erfolgt keine gegenseitige Abstandsveränderung von Spule und Kern, und es ist keine Ankerrückwirkung zum Einlesen einer Ankerposition ausgenützt.

DE 101 20 976 A1 betrifft eine Kraftmesszelle mit 'einem induktiv arbeitenden Sensorelement, welches in dem Messabschnitt einer Signal gebenden Fläche gegenüber angeordnet ist, um eine Änderung des Abstands als ein elektrisches Signal zu erfassen', wobei das 'Sensorelement in der Ausnehmung zur signalgebenden Fläche hin ausgerichtet angeordnet und verkapselt ist.' - Von welcher Art, also akustisch, optisch, pneumatisch, usw., das von der explizit angegeben, 'Signal gebenden Fläche' respektive 'signalgebenden Fläche' emittierte 'Signal' und mit welchem Informationsgehalt es beaufschlagt ist, ist nicht geoffenbart. Ebenso nicht das vom 'verkapselten Sensorelement' konkret Erfasste. Das Geoffenbarte lässt keine Realisierung zu.

DE 44 20 691 C1 beschreibt eine 'Kraftmesszelle zur Aufnahme der Gewichtskraft' mit einem 'Kraftaufnehmer aus nicht-magnetischen, elektrisch leitendem Material', welchem aber völlig im Widerspruch zu 'nicht-magnetisch' eine 'magnetische Permeabilität von nahezu 1' zugeordnet ist. Zum Vergleich: Das nichtmagnetische Vakuum weist eine magnetische Permeabilität von 4·π·10⁻⁷ Vs/Am auf. Auch diese Kraftmesszelle ist ausgestattet mit 'einem signalgebenden Teil', wobei Art und Informationsgehalt des Signals nicht geoffenbart sind. Ebenso nicht 'induktives Sensorelement'. Weiters lässt 'wobei die Sensoranordnung eine Änderung der effektiven Permeabilität des Sensorelementes aufgrund eines Wirbelstromeffektes und eine dadurch bewirkte Änderung der Impedanz in einer Sensorelement- Spule' nicht erkennen, wo oder worin die 'effektive Permeabilität' bestehe oder woraus sie sich ergibt. Auch ist nicht geoffenbart ist, auf Grund welcher physikalischen Gesetzmäßigkeit, 'eine Änderung der Permeabilität des Sensorelementes aufgrund eines Wirbelstromeffektes' resultieren soll, zumal ein nichtmagnetisches Material ja keine Permeabilitätsänderung erfahren kann. Es fehlt jedwede Erklärung, wo konkret sich aus welchem Anlass heraus 'Wirbelstrom' ausbilden soll und worin der essentielle 'Wirbelstromeffekt' denn konkret bestehe.

Ein weiterer relevanter Kraftsensor ist aus CA 2778297 A1 bekannt.

Die Offenbarung kann als naturgesetzwidrig und nicht realisierbar erkannt werden. Erfindung liegt die Aufgabe zugrunde, die Auswertbarkeit des Kraftsensors der eingangs genannten Art zu verbessern.

Erfindungsgemäß wird diese Aufgabe durch einen Kraftsensor nach Ansprüchen 1 oder 2 gelöst, der die Merkmale des Kennzeichnenden Teils des beigefügten Anspruchs 1 bzw. 2 aufweist. Die Erfindungsidee betrifft einerseits
- die geometrische Gestaltung und ergänzende Ausgestaltung elementarer oder zusammengesetzter oder Gesamt-Federkörper, an denen der Angriff einer Messgröße in Form einer Kraft oder eines Drehmomentes jeweils eine der Messgröße folgende elastische Veränderung ihrer Gestalt oder ihrer Torsion oder ihrer Position folgert, und sie betrifft andererseits
- die zielgerichtete Positionierung und starre Anbringung einer Spule, z.B. durch Klebung, an einem elementaren oder an einem zusammengesetzten oder an einem Gesamtfederkörper oder an einem fremden Trägerkörper,
- die Ausnützung der Ankerrückwirkung (siehe unten) eines ferromagnetischen oder elektrisch leitenden und im Betrieb im magnetischen Wechselfeld der Spule liegenden Federkörpers oder Federkörperabschnittes oder einer funktionellen Ausbildung als Anker, sowie, wenn Materialeigenschaften für eine angestrebte Ankerrückwirkung nicht hinreichen,
- die starre Anbringung eines im Betrieb eine Ankerrückwirkung in der Spule auslösenden Ankermaterials an einem Federkörper oder an dessen funktioneller Ausformung.

Aus einer messgrößenverursachten Veränderung der magnetischen Kopplung von Spule und Anker und damit einhergehender Veränderung der Admittanz der Spule, bekannt als Ankerrückwirkung, kann auf die Messgröße rückgeschlossen werden. Bei elektrisch schlecht leitendem ferromagnetischem Anker erfährt die induktive Komponente der Admittanz oder Impedanz die hauptsächliche Veränderung, bei elektrisch leitendem Anker zufolge Wirbelstrombildung die reelle Komponente.

Um eine Ankerrückwirkung in der Spule zu folgern, kann ein Federkörper zur Gänze oder nur zum Teil im magnetischen Wechselfeld der Spule liegen, wobei stets nur der im magnetischen Wechselfeld liegende Teil als Anker fungiert. Analoges gilt für eine funktionelle Ausformung, an der ein die Ankerrückwirkung begünstigtes Ankermaterial, beispielsweise in Form eines Plättchens, angebracht sein kann.

Eine als Anker genützte funktionelle Ausformung stellt einen mechanischen Zeiger dar, dessen Position oder Positionsveränderung elektrisch mittels einer Spule durch Ankerrückwirkung eingelesen wird. Analoges gilt für Positionen oder Positionsveränderungen von Federkörpern.

Mit der Erfindung vergleichbare Anwendungen und Ausgestaltungen von Federkörpern als Anker und berührungsfrei Lesefunktion übernehmenden Spulen sind nicht bekannt.

Bekannte Messeinrichtungen für Kräfte oder Drehmomente sind sowohl technisch als auch platzbedarfsmäßig als auch kosten- und folgekostenmäßig wesentlich aufwändiger als die erfindungsgegenständlichen, und ihre Erfassung von Federkörperverformungen erfordert Federkörperberührung, beispielsweise durch die Anbringung von Dehnungsmessstreifen an ihnen. Sowohl das Erfordernis geeignet großer und zugänglicher Montageflächen als auch die Anbringung mit ihren Zu- und Ableitungsdrähten bringen nicht kompensierbare mechanische Vorspannungen in den Federkörper ein, was deren Applikation eng einschränkt und ihren Einsatz im Bereich Feinmechanik sogar zur Gänze ausschließt.

Die gegenständliche Erfindung erübrigt jedwede mechanische Berührung oder elektrische Kontaktierung des Federkörpers, sodass dieser beliebig fragil und klein und beliebig geformt sein kann. Weder Spule noch Anker unterliegen im Betrieb irgendwelchen Fremdkräften an ihnen, weswegen, im Gegensatz zu Dehnungsmessstreifen, keine Kriecheffekte auftreten.

Im Folgenden wird die Erfindungsidee an Hand von graphischen Darstellungen mehrerer Ausführungsvarianten näher erläutert.

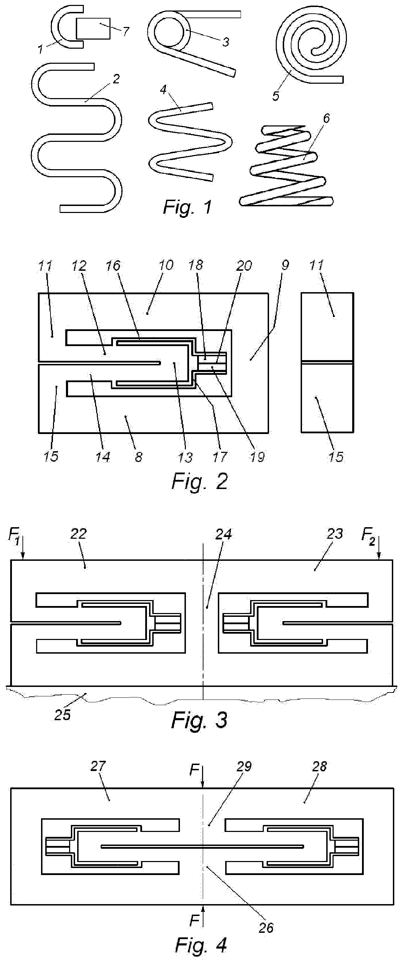

Fig. 1 zeigt einen beispielsweisen etwa C- oder U- oder V-förmigen, ohne Verlust essentieller mechanischer Eigenschaften (Elastizität, Biegbarkeit, Tordierbarkeit) nicht
mehr teilbaren und somit elementaren Federkörper 1. Zwei oder mehr derartige elementare Federkörper können mit fließenden Materialübergängen zu beliebig gestalteten Federkörpern 2 bis 6 aneinandergereiht werden bzw. sein.

Die komplexe Admittanz einer Spule 7 als Leseeinrichtung, in deren magnetischem Wechselfeld zumindest ein Teilstück eines elementaren Federkörpers 1 oder eines zusammengesetzten oder eines Gesamtfederkörpers 2 bis 6 als Anker liegt, erfährt bei messgrößenverursachter Gestaltsveränderung oder Positionsveränderung (in Bezug auf die Spule) zufolge Ankerrückwirkung eine der Gestaltsveränderung bzw. Positionsveränderung und damit auch der Messgrößenveränderung folgende Veränderung, aus welcher auf elektronischem Weg auf die Messgröße rückgeschlossen werden kann.

Fig. 2 zeigt einen beispielsweisen Kraftsensor mit einem etwa U-förmigen elementaren Federkörper 12, 13, 14 mit zwei zeigerartig von seinen etwa parallelen Schenkeln 12, 14 abstehenden und frei endenden funktionellen Ausbildungen 16, 17. Im Bereich des freien Endes der einen funktionellen Ausbildung 16 ist eine Spule 18 als Leseeinrichtung angebracht. Im Betrieb liegt über einen gewissen Luftspalt 20 hinweg entweder das freie Ende der anderen funktionellen Ausbildung 17 als Anker oder das dort angebrachte spezielle Ankermaterial 19 als Anker im magnetischen Wechselfeld der Spule 18. Eine Veränderung der gegenseitigen Positionen von Spule und Anker bewirkt Ankerrückwirkung in Form einer Veränderung der Admittanz der Spule.

Je ein fließender Materialübergang 11, 15 von jedem Schenkel 12, 14 des einen elementaren Federkörpers 12, 13, 14 zu je einem Schenkel 8, 10 eines etwa U-förmigen zweiten elementaren Federkörpers 8, 9, 10 vervollständigen zu einer Kombination aus zwei elementaren Federkörpern, einem einstückigen zusammengesetzten Federkörper , zusammen mit den funktionellen Ausbildungen 16, 17 zugleich auch zu einem Gesamtfederkörper, wobei die Aneinanderreihung 8 bis 15 eine in sich geschlossene ist.

Ein Angriff einer den gegenseitigen Abstand der Schenkel 12, 14 des in der graphischen Darstellung inneren elementaren Federkörpers verändernden Messkraft, oder ganz allgemein Messgröße, vorzugsweise an den Schenkeln 8, 10 des in der graphischen Darstellung äußeren Federkörpers, folgert eine Veränderung der gegenseitigen Positionen von Spule 18 und Anker 17, 19 bei gleichzeitiger Veränderung der Admittanz der Spule, aus dieser Veränderung auf die Messkraft bzw. Messgröße rückgeschlossen werden kann.

Fig. 3 zeigt eine beispielsweise spiegelbildlich gestaltete ebene Kombination 22, 23 zweier Kraftsensoren nach Fig. 2 mit gemeinsamem Steg 24 der beiden äußeren Federkörper zu einem Doppel-Kraftsensor. Der gemeinsame Steg kann als eine Kombination mit fließendem Materialübergang der Stege (9 in Fig. 2) der beiden U-Gestalten nach Fig. 2 aufgefasst werden. Mit dieser Gestaltungsvariante können gleichzeitig zwei Messkräfte F1, F2 erfasst werden. Es besteht ganz allgemein keine Beschränkung auf ebene Kombination.

Fig. 4 zeigt eine beispielsweise spiegelbildlich gestaltete ebene Kombination zweier Kraftsensoren 27, 28 nach Fig. 2 mit paarweise fließenden Materialübergängen 26, 29 ihrer den Stegen (9 in Fig. 2) der äußeren Federkörper abgewendeten Seiten.

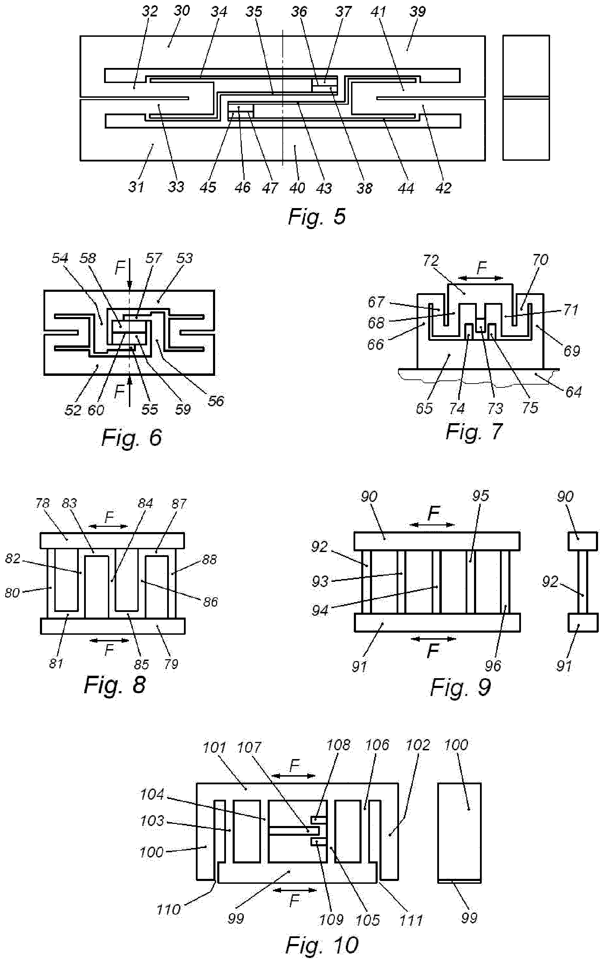

Fig. 5 zeigt eine beispielsweise ebene Kombination zweier elementarer Federkörper 32, 33, 41, 42 mit je zwei funktionellen Ausformungen 34, 35, 43, 44 zu einem Kraftsensor, an deren jeweils einer Ausformung 34, 44 je eine Spule 37, 45 als Leseeinrichtung angebracht ist und deren jeweils andere 35, 43 als Zeiger entweder mit ihrem freien Ende als Anker im betrieblichen magnetischen Wechselfeld ihrer nächstgelegenen Spule liegt, oder deren jeweiliges angebrachtes Ankermaterial 38, 46 als Anker im magnetischen Wechselfeld der nächstgelegenen Spule liegt.

Die paarweise einander abgewendeten lateralen Endabschnitte der Schenkel 32, 41 bzw. 33, 42 beider etwa U-förmiger elementarer Federkörper sind mittels der Krafteinleitung bzw. der Kraftausleitung dienenden fließenden Materialübergängen oder funktionellen Ausformungen 30, 31, 39, 40 paarweise ineinander übergeführt, was die Aneinanderreichung 30, 32, 33, 31, 40, 42, 41, 39 zu einer in sich geschlossen macht. Eine den gegenseitigen Abstand dieser funktionellen Ausformungen oder fließenden Materialübergänge verändernde Messkraft folgert ihr folgende Veränderungen der jeweils zwischen Spule 37, 45 und Anker 35, 38 bzw. 43, 46 bestehenden Luftspalte 36 bzw. 47 und damit einhergehende Ankerrückwirkungen in den Spulen unter Veränderung deren Admittanzen, aus welchen auf die Messkraft rückgeschlossen werden kann.

Fig. 6 zeigt eine beispielsweise ebene, etwa zentralsymmetrisch profilierte Kraftsensor-Gestaltungsvariante mit zwei lateralen mäanderförmigen Federkörpern, deren jeder aus einer Aneinanderreihung mit fließenden Materialübergängen etwa C- oder U-förmiger elementarer Federkörper aufgebaut ist, und deren jeweilige Endabschnitte oder funktionelle Ausformungen 52, 53 einerseits paarweise fließend ineinander übergeführt sind, und andererseits an je einem dieser Endabschnitte eine frei endende funktionelle Ausformung 54, 55 bzw. 56, 57 vorliegt, an deren einer 56, 57 eine Spule 58 als Leseeinrichtung angebracht ist, und dem freien Ende 55 der anderen 54, 55 zeigerartigen entweder Ankerfunktion zukommt oder dort ein gewünschtes Ankermaterial 59 angebracht ist.

Ein Angriff einer Messkraft F auf die Endabschnitte oder funktionellen Ausformungen 52, 53 der lateralen Mäanderformen folgert eine der Messkraft folgende Veränderung der Länge des Luftspaltes 60 zwischen Spule 58 und Anker 55 bzw. 59 und damit einhergehend durch Ankerrückwirkung eine Veränderung der Admittanz der Spule 58, aus welcher auf die Messkraft F rückgeschlossen werden kann. Bei Erreichen einer zulässigen maximalen Messkraft setzen die funktionellen Ausformungen 54, 56 vor plastischer Verformung der Federkörper schützend auf die ihnen jeweils gegenüberliegenden funktionellen Ausformungen 52, 53 auf.

Fig. 7 zeigt eine beispielsweise spiegelsymmetrisch gestaltete Kraftsensor-Gestaltungsvariante mit zwei lateralen mäanderförmigen zusammengesetzten Federkörpern 66, 67, 68 bzw. 69, 70, 71, deren jeweilige Enden paarweise mittels individueller, der Krafteinleitung und der Kraftausleitung dienenden, zueinander etwa parallelen, fließenden Materialübergängen oder funktionellen Ausformungen 65, 72 ineinander übergeführt sind.

Vorzugsweise an der in der graphischen Darstellung am Trägerkörper 64 fixierten funktionellen Ausformung 65 ist mindestens eine Spule 74, 75 starr angebracht, und an der der Einleitung der Messkraft F dienenden anderen funktionellen Ausformung 72 ein Anker 73. Das freie Ende des Ankers 73 liegt im Betrieb im magnetischen Wechselfeld der mindestens einen Spule 74, 75. Aus einer die funktionellen Ausformungen 65, 72 einander entgegengesetzt parallelverschiebenden Messkraft F resultiert eine gegenseitige Positionsveränderung von Anker 73 und mindestens einer Spule 74, 75, diese Spule zufolge Ankerrückwirkung eine der Messkraft folgende Veränderung ihrer Admittanz erfährt und aus dieser auf die Messkraft F rückgeschlossen werden kann.

Fig. 8 zeigt einen beispielsweisen ebenen Kraftsensor mit einer in ihrem Verlauf einer Rechteckfunktion ähnelnden, mit fließenden Materialübergängen gebildeten mäanderförmigen Aneinanderreihung 80 bis 88 mehrerer etwa U-förmiger elementarer Federkörper, bei der die die Schenkel 80, 82, 84, 86, 88 paarweise mit fließenden Materialübergängen verbindenden Stege 81, 83, 85, 87 jeweils entweder mit einem Krafteinleitungsteil 78 oder mit einem Kraftausleitungsteil 79 starre Verbindung unterhalten. Eine aus dem Angriff eines Messkräftepaares F, F resultierende Parallelverschiebung des Krafteinleitungsteiles 78 gegenüber dem Kraftausleitungsteil 79 folgert in Richtung trigonometrischer Tangensfunktion tendierende Gestaltsveränderungen der Schenkel 80, 82, 84, 86, 88, jeweils mit etwa mittigem Wendepunkt. Die Stege 81, 83, 85, 87 erfahren dabei keine Verformung, weswegen ihnen in dieser Anwendung keine Federkörperfunktion zukommt.

Fig. 9 trägt Letzterem Rechnung und zeigt die Gestaltungsvariante Fig. 8 hier mit in den Krafteinleitungsteil 90 integrierten Stegen und mit in den Kraftausleitungsteil 91 integrierten Stegen.

Fig. 10 zeigt eine beispielsweise praktische Ausführungsvariante nach dem in Fig. 9 dargelegten Prinzip, in welcher eine messgrößenbedingte Veränderung der Gestalt seines ersten Schenkels 104 eines etwa U-förmigen elementaren Federkörpers 104, 99, 105 mittels eines von ihm abstehenden Ankers 107 und mittels mindestens einer Spule 108, 109 auf die Veränderung der Gestalt seines zweiten Schenkels 105 bezogen ist, wobei die mindestens eine Spule als berührungslos erfassende Leseeinrichtung am zweiten Schenkel angebracht ist.

Die dem Steg 99 des elementaren Federkörpers 104, 99, 105 abgewendeten Enden des ersten Schenkels 104 und des zweiten Schenkels 105 gehen fließend in den etwa geradlinigen Krafteinleitungsteil 101, der als ein benachbarter Körper auffassbar ist, über. Dieser benachbarte Körper kann zur L-Gestalt 100, 101 erweitert sein und unter Schließung eines ersten Luftspaltes 110 durch Aufsetzen seines einen freien Endes 100 auf den Steg 99, oder auf eine von ihm abstehenden funktionellen Ausformung, eine einseitige Auslenkungsbegrenzung bewirken. Bei Erweiterung des benachbarten Körpers zur C-Gestalt 100, 101, 102 kann unter Schließung eines zweiten Luftspaltes 111 eine beidseitige Auslenkungsbegrenzung erreicht werden. Der Steg 99 kann lateral über die Schenkel 104, 105 hinaus verlängert ausgeführt und dort mit weiteren integrierten Stegen und Schenkeln 103, 106 zu einer offenen Kombination oder Aneinanderreihung elementarer Federkörper fortgesetzt sein.

Mit einer einem Messkräftepaar F, F folgenden Veränderung der Gestalt des ersten Schenkels 104, nämlich einer in Richtung einer trigonometrischen Tangensfunktion tendierenden, geht eine Veränderung der Position des freien Endes des von diesem ersten Schenkel abstehenden Ankers 107 einher, welches im Betrieb im magnetischen Wechselfeld mindestens einer am zweiten Schenkel 105 angebrachten Spule 108, 109 liegt, woraus durch Ankerrückwirkung eine der Messkraft F folgende Veränderung der Admittanz der mindestens einen Spule, aus dieser Admittanz auf die Messkraft F rückgeschlossen werden kann, resultiert.

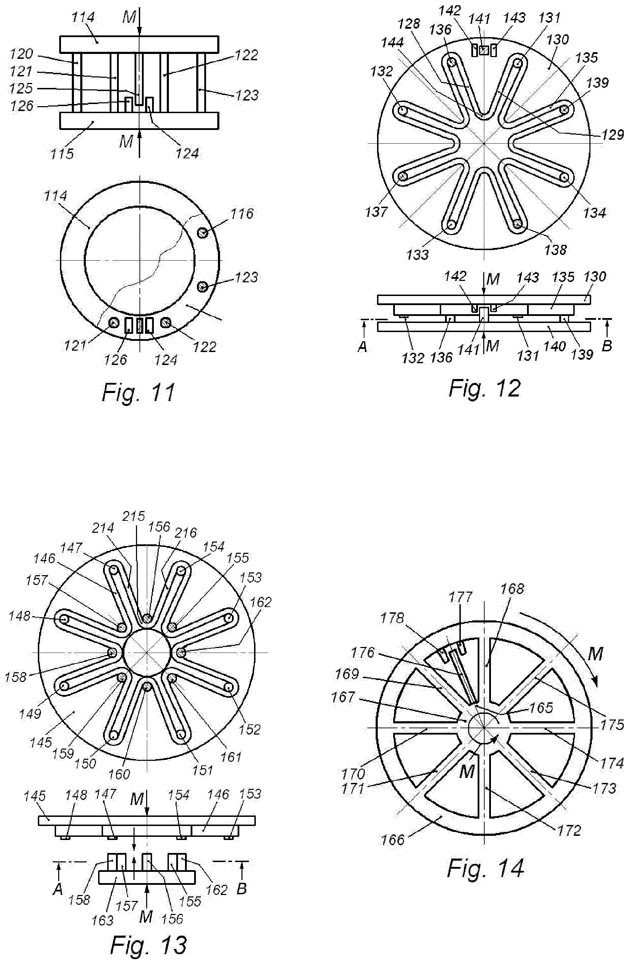

Fig. 11 zeigt den in Fig. 9 beispielsweise geradlinigen Krafteinleitungsteil 90 hier in einen Drehmomenteinleitungsring 114, und den dort ebenso geradlinigen Kraftausleitungsteil 91 hier in einen Drehmomentausleitungsring 115 - in topologischem Sinn - abgebildet oder umgeformt oder geschlossen, wobei auch topologische Abbildungen in Scheiben möglich sind.

Bei der Übertragung eines Drehmomentes M zwischen Drehmomenteinleitungsring 114 und Drehmomentausleitungsring 115 erfahren die Schenkel 121, 122 eines elementaren U-förmigen Federkörpers 121, 115, 122 mit in den Drehmomentausleitungsring integriertem Steg jeweils eine in Richtung trigonometrischer Tangensfunktion tendierende Gestaltsveränderung, wobei das freie Ende des vom Steg im Drehmomenteinleitungsring 114 in Richtung Drehmomentausleitungsring 115 abstehenden Ankers 125 im Betrieb im magnetischen Wechselfeld mindestens einer am Drehmomentausleitungsring angebrachten Spule 124, 126 liegt, woraus durch Ankerrückwirkung eine dem Drehmoment M folgende Veränderung der Admittanz der mindestens einen Spule, aus dieser Admittanz auf die Messkraft F rückgeschlossen werden kann, resultiert.

Fig. 12 zeigt einen beispielsweisen Drehmomentsensor mit einer punktsymmetrisch seesternartig konturierten, ebenen Aneinanderreihung mehrerer etwa V- oder U-förmiger elementarer Federkörper 128, 129, 135 mit in ihrer tangentialen Aufeinanderfolge jeweils fließenden Materialübergängen zu einem zusammengesetzten Federkörper gestaltet, koaxial mit und zwischen einer der Drehmomenteinleitung dienenden Scheibe 130 und einer der Drehmomentausleitung dienenden Scheibe 140 eingefügt und so einen Gesamtfederkörper bildend. Der zusammengesetzte Federkörper unterhält in der Nähe seiner radialen Maxima, beispielsweise mittels Schweißstellen oder Zapfen, starre Verbindungen 131 bis 134, 136 bis 139 zu beiden Scheiben 130, 140, wobei diese Verbindungen in ihrer tangentialen Aufeinanderfolge abwechselnd mit der einen Scheibe 130 und mit der anderen Scheibe 140 bestehen. Aus einer Übertragung eines Drehmomentes M resultiert eine dem Drehmoment folgende gegenseitige Verdrehung der Scheiben 130, 140 mit der Folge, dass das periphere freie Ende des an der der Drehmomentausleitung dienenden Scheibe 140 angebrachten Ankers 141 in Bezug auf mindestens eine an der der Drehmomenteinleitung dienenden Scheibe 130 angebrachten Spule 142, 143 als Leseeinrichtung eine tangentiale Positionsveränderung erfährt, mit welcher zufolge Ankerrückwirkung eine Veränderung der Admittanz der mindestens einen Spule 142, 143 einhergeht und aus dieser auf das Drehmoment M rückgeschlossen werden kann.

Fig. 13 zeigt einen Fig. 12 analog gestalteten Drehmomentsensor, bei welchem alle peripheren Abschnitte des seesternartig konturierten zusammengesetzten Federkörpers 146 starre Verbindungen 147 bis 154 mit der drehmomenteinleitenden Scheibe 145 unterhalten, und alle zentralen Abschnitte starre Verbindungen 155 bis 162 mit der drehmomentausleitenden Scheibe 163 unterhalten. Die in Fig. 13 nicht eingezeichnete Spule-Anker-Kombination kann der in Fig. 12 gleichen.

Fig. 14 zeigt eine beispielsweise, in topologischem Sinn homöomorphe Abbildung einer achtschenkeligen Federkörpergestaltung nach Fig. 9, bei der der dortige Krafteinleitungsteil 90 hier in einen Drehmomenteinleitungsring 166 übergeführt ist, und der dortige Kraftausleitungsteil 91 hier in eine zentrale Nabe 167 übergeführt ist. Sie kann aber auch als eine zu der in Fig. 13 dargestellten Federkörpergestaltung analoge aufgefasst werden, bei der die dortigen jeweiligen peripheren Abschnitte des seesternartig konturierten zusammengesetzten Federkörpers mit fließenden Materialübergängen statt in eine Scheibe in einen Kranz 166 integriert sind, und die zentralen Abschnitte des zusammengesetzten Federkörpers in eine Nabe 167 integriert sind.

Bei der Übertragung eines Drehmomentes M zwischen Kranz 166 und Nabe 167 erfahren diese beiden eine dem Drehmoment folgende entgegengesetzte winkelmäßige Auslenkung mit der Folge, dass das freie Ende der von der Nabe radial abstehenden funktionellen Ausformung 176 im Betrieb als Anker, oder ein dort angebrachtes Ankermaterial als Anker, im magnetischen Wechselfeld mindestens einer am Kranz 166 angebrachten Spule 177, 178 liegt, wobei die winkelmäßige Auslenkung von Kranz und Nabe eine Veränderung der Ankerrückwirkung in Form einer Veränderung der Admittanz der mindestens einen Spule folgert, aus welcher auf das Drehmoment rückgeschlossen werden kann.

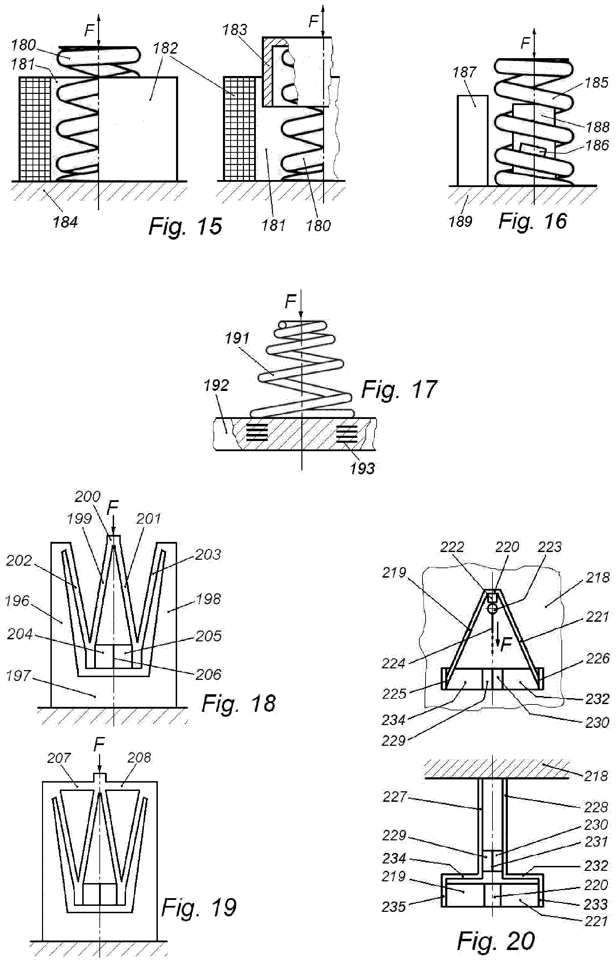

Fig. 15 zeigt eine erfindungsgemäße Kraftsensor-Gestaltungsvariante mit dreidimensionaler Aneinanderreihung mehrerer etwa C-förmiger elementarer Federkörper mit fließenden Materialübergängen zu einer Schraubenfedergestalt als zusammengesetzten oder Gesamtfederkörper 180, welcher im Betrieb teilweise oder zur Gänze als Anker im magnetischen Wechselfeld einer ihn umgebenden Spule 182 liegt und gegebenenfalls mit einem an ihm angebrachten gewünschten speziellen Ankermaterial 183 ergänzt sein kann. Eine den Federkörper und zugleich Anker 180 verformende Messkraft F folgert durch Ankerrückwirkung in der Spule 182 eine Veränderung deren Admittanz, aus welcher auf die Messkraft F rückgeschlossen werden kann.

Eine dreidimensionale Aneinanderreihung ist ganz allgemein weder auf C-förmige elementare Federkörper noch auf die gezeichnete Schraubenfedergestalt beschränkt.

Fig. 16 zeigt drei weitere erfindungsgemäße Kraftsensor-Ausführungsmuster mit einer beispielweisen, aber nicht auf eine solche Gestalt einschränkenden, Schraubenfedergestalt sowohl als einen aus elementaren Federkörpern zusammengesetzt denkbaren Gesamtfederkörper als zugleich auch als Anker 185, welcher im Betrieb zumindest zu einem Teil im magnetischen Wechselfeld entweder einer von ihm umgebenen zentralen Spule 188, oder einer benachbarten Spule 187, oder einer an ihm angebrachten Spule 186 liegt, und bei Veränderung seiner Gestalt zufolge einer Messkraft F durch Ankerrückwirkung in der jeweiligen Spule 186, 187, 188 deren Admittanz verändert, aus welcher auf die Messgröße F rückgeschlossen werden kann.

Fig. 17 zeigt eine weitere erfindungsgemäße Kraftsensor-Gestaltungsvariante mit einer beispielsweisen, etwa dem Verlauf einer Kegelfeder folgenden, mit fließenden Materialübergängen zwischen ihnen, dreidimensionalen Aneinanderreihung mehrerer etwa C-förmiger elementarer Federkörper zu einem zusammengesetzten oder Gesamtfederkörper und zugleich auch Anker 191, welcher im Betrieb zumindest zu einem Teil im magnetischen Wechselfeld einer beispielsweise in Multilayertechnik in eine Leiterplatte 192 integrierten Spule 193 liegt. Mit einer Veränderung der Gestalt des Ankers 191 zufolge einer Messkraft F geht durch Ankerrückwirkung in der Spule 193 eine Veränderung deren Admittanz einher, aus welcher auf die Messgröße F rückgeschlossen werden kann.

Fig. 18 zeigt eine beispielsweise Kraftsensor-Gestaltungsvariante mit zwei mit fließendem Materialübergang 200 in einer Ebene zu einem W-förmigen zusammengesetzten Federkörper 200 bis 203 aneinandergereihten etwa V-förmigen elementaren Federkörpern 199, 202 bzw. 201, 203. Die lateralen Enden des zusammengesetzten Federkörpers sind durch einen Stützkörper 196, 197, 198 unterstützt oder gehen in diesen, einen Gesamtfederkörper bildend, fließend über. Der Angriff einer positiven Messkraft F in der eingezeichneten Richtung auf den fließenden Materialübergang 200 folgert eine Aufweitung des von den zentralen Schenkeln 199, 201 aufgespannten Winkels, wobei im Betrieb eine an einem dieser zwei Schenkel 199 angebrachte Spule 204 eine Vergrößerung ihres Abstandes 206 zum zweiten Schenkel 201 als Anker, oder zu einem an diesem Schenkel angebrachten Ankermaterial 205, erfährt, womit durch Ankerrückwirkung eine der Messkraft F folgende Veränderung der Admittanz der Spule 204 einhergeht, und aus dieser Veränderung auf die Messkraft rückgeschlossen werden kann.

Fig. 19 zeigt eine Kraftsensorgestaltung nach Fig. 18 mit fakultativen messbereicherweiternden Federkörpern 207, 208, welche so ausgeführt sein können, dass für ihre Verformung ein Großteil der Messkraft F aufzuwenden ist.

Fig. 20 zeigt eine beispielsweise Kraftsensor-Gestaltungsvariante mit einer in Aufeinanderfolge unterbrechungslosen Aneinanderreihung von fünf elementaren Federkörpern 227, 235, 219, 220, 221, 233, 228 zu einem dreidimensionalen zusammengesetzten Federkörper, dessen Enden oder Endstücke an einem Trägerkörper 218 starr angebracht sind. Der in der Aufeinanderfolge fünfte, etwa L-förmige elementare Federkörper 228 ist zum übereinstimmend gestalteten ersten elementaren Federkörper 227 spiegelbildlich angeordnet, wobei ihre jeweiligen vom Trägerkörper 218 abstehenden Teilabschnitte in Trägerkörpernähe mit geringem gegenseitigem Abstand etwa parallel geführt sind und in weiterer Folge, vorzugsweise sprunghaft, jeweils mit fließenden Materialübergängen 232 bzw. 234 in gegenseitig größer distanzierte, etwa übereinstimmend gestaltete, zueinander etwa spiegelbildlich angeordnete, etwa L-förmige weiterführende elementare Federkörper 235 bzw. 233 übergehen und mit den jeweiligen trägerkörperfernen Enden oder Endabschnitten individuell fließend in die Enden 225, 226 des etwa V-förmigen dritten elementaren Federkörpers 219, 220, 221 übergehen, wobei dessen durch seine Schenkel 219, 221 aufgespannte Ebene etwa normal auf die von den anderen elementaren Federkörpern 227, 235, 233, 228 aufgespannte Ebene ausgerichtet ist.

Aus einer im Betrieb im Bereich der Zusammenführung oder des Ursprunges 220 der beiden etwa V-förmig angeordneten Schenkel 219, 221 des in der Aufeinanderfolge dritten elementaren Federkörpers angreifenden Messkraft F mit einer den von diesen Schenkeln 219, 221 aufgespannten Winkel erweiternder Folge resultiert eine Aufweitung des gegenseitigen Abstandes von in der Aufeinanderfolge erstem 227 und fünftem 228 elementarem Federkörper, woraus eine Zunahme des Abstandes zwischen einer vorzugsweise am ersten elementaren Federkörper 227 angebrachten Spule 229 und dem zumindest zu einem Teil in ihrem magnetischen Wechselfeld liegenden und als Anker fungierenden fünften elementaren Federkörper 228, oder einem an diesem Federkörper angebrachten Ankermaterial 230, resultiert, und damit einhergehend zufolge Ankerrückwirkung die Admittanz der Spule eine der Messkraft F folgende Veränderung erfährt, aus welcher auf die Messkraft rückgeschlossen werden kann.

Die überlastungsgeschützte Einleitung einer Messkraft F kann mittels eines Fadens 224 erfolgen, dessen eines Ende an einer ferromagnetischen Kugel 223 befestigt ist, welche von einem im Bereich des Ursprunges 220 der Schenkel 219, 221 angebrachten Magneten 222 angezogen und gehalten ist, wenn die Messkraft F unter einem zulässigen Maximum liegt.

## Patentansprüche

1. Kraftsensor mit einer dreidimensionalen Aneinanderreihung mehrerer C-förmiger elementarer Federkörper mit fließenden Materialübergängen zu einer Schraubenfedergestalt als Gesamtfederkörper (180, 185), **dadurch gekennzeichnet, dass** der Gesamtfederkörper im Betrieb zumindest zu einem Teil als Anker im magnetischen Wechselfeld einer ihn umgebenden Spule (182), oder einer von ihm umgebenen zentralen Spule (188), oder einer in seiner Umgebung angebrachten Spule (187), oder einer an ihm angebrachten Spule (186) liegt, wobei bei einer Veränderung der Gestalt des Gesamtfederkörpers zufolge einer Messkraft (F) durch Ankerrückwirkung in der jeweiligen Spule deren Admittanz verändert wird, woraus auf die Messkraft (F) rückgeschlossen wird.

2. Kraftsensor mit einer dreidimensionalen Aneinanderreihung mehrerer C-förmiger elementarer Federkörper mit fließenden Materialübergängen zu einer Kegelfedergestalt als Gesamtfederkörper (191), **dadurch gekennzeichnet, dass** der Gesamtfederkörper im Betrieb zumindest zu einem Teil im magnetischen Wechselfeld einer in eine Leiterplatte integrierten Spule (193) liegt, wobei bei einer Veränderung der Gestalt des Gesamtfederkörpers zufolge einer Messkraft (F) durch Ankerrückwirkung in der jeweiligen Spule deren Admittanz verändert wird, woraus auf die Messkraft (F) rückgeschlossen wird.

## Claims

1. A force sensor having a three-dimensional sequential arrangement of a plurality of C-shaped elementary spring bodies having flowing material transitions to a coil spring shape as a total spring body (180, 185), **characterized in that** the total spring body, during operation, lies at least partially as an armature in the magnetic alternating field of a coil (182) surrounding the same, or a central coil (188) surrounded thereby, or a coil (187) mounted in the vicinity thereof, or a coil (186) mounted thereon, wherein, when the shape of the total spring body is changed because of a measurement force (F) due to armature reaction in the respective coil, the admittance thereof is changed, whereby the measuring force (F) is deduced.

2. The force sensor having a three-dimensional sequential arrangement of a plurality of C-shaped elementary spring bodies having flowing material transitions to a volute spring shape as a total spring body (191), **characterized in that** the total spring body, during operation, lies at least partially in the magnetic alternating field of a coil (193) that is integrated into a printed circuit board, wherein, when the shape of the total spring body is changed because of a measurement force (F) due to armature reaction in the respective coil, the admittance thereof is changed, whereby the measuring force (F) is deduced.

## Revendications

1. Capteur de force comprenant une série tridimensionnelle de plusieurs éléments élastiques élémentaires en forme de C présentant des transitions en venue de matière de manière à obtenir une forme élastique hélicoïdale en tant qu'élément élastique complet (180, 185), **caractérisé en ce que**, en fonctionnement, l'élément élastique complet est situé au moins en partie en tant qu'induit dans le champ magnétique alternatif d'une bobine (182) entourant celui-ci ou d'une bobine centrale (188) entourée par celui-ci ou d'une bobine (187) montée dans l'environnement de celui-ci ou d'une bobine (186) montée sur celui-ci ; lorsque la forme de l'élément élastique complet change sous l'action d'une force de mesure (F), l'admittance de la bobine, de laquelle la force de mesure (F) est déduite, est modifiée par réaction de l'induit dans la bobine respective.

2. Capteur de force comportant une série tridimensionnelle de plusieurs éléments élastiques élémentaires en forme de C présentant des transitions en venue de matière de manière à obtenir une forme élastique conique en tant qu'élément élastique complet (191), **caractérisé en ce que**, en fonctionnement, l'élément élastique complet est situé au moins en partie dans le champ magnétique alternatif d'une bobine (193) intégrée dans une carte de circuit imprimé ; lorsque la forme de l'élément élastique complet change sous l'action d'une force de mesure (F), l'admittance de la bobine, de laquelle la force de mesure (F) est déduite, est modifiée par réaction de l'induit dans la bobine respective.
